# EUROPÄISCHE PATENTSCHRIFT

(11) **EP 3 022 494 B1**
(45) Veröffentlichungstag und Bekanntmachung des Hinweises auf die Patenterteilung: **14.10.2020**
(21) Anmeldenummer: 14744755.1
(22) Anmeldetag: 10.07.2014
(51) Int. Cl.: F24D 15/02

(54) **SYSTEM ZUM SPEICHERN VON ENERGIE**
SYSTEM FOR STORING ENERGY
SYSTÈME DE STOCKAGE D'ÉNERGIE

(30) Priorität: 15.07.2013 DE 102013107463
(43) Veröffentlichungstag der Anmeldung: 25.05.2016
(73) Patentinhaber: Holub, Jan, 02943 Weisswasser (DE)
(72) Erfinder: Holub, Jan, 02943 Weisswasser (DE)
(74) Vertreter: Bittner, Thomas L.
(86) Internationale Anmeldenummer: PCT/DE2014/100244
(87) Internationale Veröffentlichungsnummer: WO 2015/007269

(56) Entgegenhaltungen:
- EP-A2- 0 633 420
- WO-A1-94/09333
- DE-U1- 9 311 217

## Beschreibung

Die Erfindung betrifft ein System zum Speichern von Energie.

### Hintergrund

Es sind verschiedene Systeme zum Speichern von Energie bekannt, beispielsweise Wärmespeicher zum Speichern von thermischer Energie.

Aus dem Stand der Technik sind beispielsweise Wärmespeicher im Inneren eines Hauses bekannt, die ein großes Volumen von Wasser in einem Stahl- oder Kunststoffbehälter fassen. Der Behälter ist mit einer Wärmedämmung isoliert, die üblicherweise 20 bis 40 cm stark ist. Das Wasser in dem Wärmespeicher wird beispielsweise mittels einer Solarthermieanlage erwärmt. An dem Wärmespeicher ist eine Heizanlage angeschlossen, mittels der im Winter das Haus beheizt werden kann.

Weitere Wärmespeicher sind in den Dokumenten US 3,823,305 A, DE 37 25 163 A1, DE 10 2011 107 315 A1, US 4,520,862 A und DE 1 934 283 offenbart.

Das Dokument DE 93 11 217 U1 offenbart einen Wärmespeicherblock für ein Elektrowärmespeicherheizgerät gemäss dem Oberbegriff des Patentanspruchs 1. Der Wärmespeicherblock weist eine Außenwandung und eine Innenwandung auf. Zwischen der Außenwandung und der Innenwandung ist ein Isolationszwischenraum eingeschlossen, der mit Wasserstoffgas gefüllt ist. Innerhalb der Innenwandung ist eine Wärmespeicherfüllung angeordnet.

Das Dokument WO 94/09333 A1 offenbart eine Vakuumisolierung.

Das Dokument EP 0 633 420 A2 offenbart eine weitere Ausführungsform zur Isolierung mittels Vakuum.

### Zusammenfassung

Aufgabe ist es, verbesserte Technologien zum Speichern von Energie anzugeben. Insbesondere soll eine Beheizung eines Gebäudes mit dem Wärmespeicher ermöglicht werden.

Diese Aufgabe wird durch ein System nach dem unabhängigen Anspruch 1 gelöst. Vorteilhafte Ausführungsformen sind Gegenstand von abhängigen Ansprüchen.

Es ist ein System zum Speichern von Energie bereitgestellt. Das System weist einen Wärmespeicher auf. Der Wärmespeicher umfasst einen Speicherbereich, der ein Wärmespeichermedium aufweist, und eine den Speicherbereich umgebende Außenwand. Ein Zwischenbereich zwischen dem Speicherbereich und der Außenwand ist zumindest teilweise mit einem gasförmigen Medium und einem Stützmaterial gefüllt. Der Zwischenbereich ist des Weiteren mit einer Pumpeinrichtung derart gekoppelt, dass ein Druck des gasförmigen Mediums regelbar ist. In einer Ausführungsform umfasst das System nur den Wärmespeicher. In anderen Ausführungsformen können weitere Komponenten vorgesehen sein. Der von der Außenwand umgebende Zwischenbereich mit dem regelbaren Gas wird auch als Vakuumisolierung bezeichnet. Der Wärmespeicher weist ausschließlich die Außenwand auf und ist frei von Innenwänden und weiteren Außenwänden.

Der Wärmespeicher kann mit einer Einrichtung gekoppelt sein, die eine Energie in das Wärmespeichermedium einbringt, derart, dass das Wärmespeichermedium erwärmt wird. Die Erwärmung des Wärmespeichermediums kann beispielsweise mittels elektrischer Energie erfolgen. Das erwärmte Wärmespeichermedium gibt die Wärmeenergie an die Umgebung ab, beispielsweise in Form von Wärmestrahlung oder Konvektion. Die Wärmeenergie kann durch den Zwischenbereich und die Außenwand dringen und somit die Umgebung des Wärmespeichers erwärmen.

Die Pumpeinrichtung ermöglicht eine Regelung der Wärmeabgabe. Die Wärmeleitfähigkeit eines gasförmigen Mediums ist eng mit der mittleren freien Weglänge der Moleküle verknüpft. Die Wärmeleitfähigkeit ist bei gegebener Temperatur in einem weiten Druckbereich vom Druck und damit von der Gasdichte unabhängig. Wenn die mittlere freie Weglänge der Moleküle größer wird als der Abstand unterschiedlich temperierter Wände zwischen denen ein Wärmetransport erfolgt, wird die Wärmeleitfähigkeit druckabhängig. Wenn also der Zwischenbereich evakuiert wird, der Druck des gasförmigen Mediums also einen Schwellwert unterschreitet, nimmt die Wärmeleitfähigkeit des Mediums mit sinkendem Druck ab. Hierdurch kann der Wärmetransport von dem Wärmespeichermedium zu der Umgebung außerhalb der Außenwand nahezu vollständig unterbunden werden. Soll die Umgebung erwärmt werden, kann der Druck des gasförmigen Mediums erhöht werden, um einen Wärmetransport zu ermöglichen. Mittels der Wahl des Drucks des gasförmigen Mediums ist also der Wärmetransport von dem Wärmespeichermedium zur äußeren Umgebung regelbar.

Das gasförmige Medium kann ein reines Gas sein, beispielsweise Wasserstoff oder Helium, oder als ein Gasgemisch vorliegen, beispielsweise Luft. Der Schwellwert, ab dem die Wärmeleitfähigkeit des gasförmigen Mediums druckabhängig wird, hängt vom konkreten Gas/Gasgemisch ab. Je schwerer ein Gasmolekül ist, desto kürzer ist die mittlere freie Weglänge.

In dem Zwischenbereich ist zumindest teilweise ein Stützmaterial angeordnet. Dies ermöglicht es, ein gestütztes Vakuum in dem Zwischenbereich zu erzeugen. In dem gestützten Vakuum ist die mittlere freie Weglänge der Gasmoleküle (stark) verringert. Hierdurch ist es nicht erforderlich den Druck zu sehr zu verringern, um eine hohe Wärmeisolierung zu erzielen. Das Stützmaterial kann beispielsweise als feinporiges Material und / oder als wärmedämmendes Material gebildet sein. Das Stützmaterial kann beispielsweise in Form von festen Elementen, beispielsweise einer oder mehrerer Platten, oder als rieselfähiges Schüttgut gebildet sein. Die Platte(n) kann / können beispielsweise aus Glasfasern, einem Silikat, Kieselsäure oder einer Kombination der vorgenannten Materialien bestehen. Das Schüttgut hat vorzugsweise eine gleichmäßige Dichte, eine im Wesentlichen gleiche Körnung und / oder eine gleichartige Materialzusammensetzung. Als Schüttgut können beispielsweise Mikrohohl-Glaskugeln verwendet werden. An der Außenwand kann in einem oberen Bereich eine Einlassöffnung gebildet sein, durch die das Schüttgut in den Zwischenbereich eingebracht werden kann. Des Weiteren kann in einem Bodenbereich der Außenwand eine Auslassöffnung gebildet sein, durch die das Schüttgut aus dem Zwischenbereich entfernt werden kann. Bei einem gestützten Vakuum kann die Dicke der Außenwand reduziert werden, ohne dass deren Stabilität beeinträchtigt wird. Die Außenwand kann beispielsweise aus einer 1 bis 2 mm dicken Edelstahlwand bestehen. Es kann vorgesehen sein, dass das Stützmaterial den Zwischenbereich vollständig ausfüllt. Beispielsweise können die eine oder mehrere Platten derart in dem Zwischenbereich angeordnet sein, dass dieser vollständig gefüllt ist. Das gasförmige Medium kann sich in diesem Fall beispielsweise im Wesentlichen in Poren und / oder Zwischenräumen zwischen Bestandteilen der Platten befinden. Die Wärmeisolierung mittels des gestützten Vakuums kann etwa einen Faktor 20, 30 oder 50 effektiver sein als eine Isolierung mit herkömmlichen Materialien, bei denen keine Druckverringerung stattfindet.

Das Stützmaterial wird in dem Sinne verstanden, dass beim Ausbilden eines Unterdrucks ein gestütztes Vakuum erzeugt wird. Wie bereits oben beschrieben, bedeutet dies, dass die mittlere freie Weglänge der Moleküle verkürzt wird. Zusätzlich kann das Stützmaterial ausgebildet sein, eine statisch tragende Funktion auszufüllen. Durch die Verringerung des Drucks in dem Zwischenbereich wirken Kräfte auf die Außenwand, die von der Druckdifferenz zwischen dem Außendruck und dem Druck in dem Zwischenbereich abhängig sind. Das Stützmaterial kann ausgebildet sein, diese Kräfte aufzunehmen und eine Verformung der Außenwand zu verhindern. In diesem Fall erfüllt das Stützmaterial also zwei Funktionen. Es stützt sowohl das Vakuum als auch mechanisch die Außenwand. Ein derartiges Stützmaterial kann auch als statisch tragendes Stützmaterial bezeichnet werden. Des Weiteren kann das Stützmaterial als Strahlungsschutz (gegen Wärmestrahlung) dienen.

Der Zwischenbereich kann mit wenigstens zwei verschiedenen Stützmaterialien zumindest teilweise gefüllt sein. Ein Stützmaterial kann ein statisch tragendes Stützmaterial sein. Ein anderes Stützmaterial kann ein statisch nicht tragendes Stützmaterial sein. Die Stützmaterialien können in mehreren Lagen angeordnet sein. Das statisch nicht tragende Stützmaterial kann auch als Füllmaterial oder Dämmmaterial bezeichnet werden. Das nicht tragende Stützmaterial (Dämmmaterial) kann ebenfalls als Strahlungsschutz (gegen Wärmestrahlung) dienen.

Nach einer Ausführungsform kann der Zwischenbereich mit vier Stützmaterialien zumindest teilweise oder vollständig gefüllt sein. Die vier Stützmaterialien können derart angeordnet sein, dass zwei Stützmaterialien direkt benachbart zu der Außenwand sind und keinen Kontakt mit dem Speicherbereich haben. Die zwei Stützmaterialien bilden eine äußere Stützschicht. Zwei andere Stützmaterialien können direkt benachbart zu dem Speicherbereich angeordnet sein und keinen Kontakt mit der Außenwand haben. Sie bilden eine innere Stützschicht. Die Wärmeübergangskoeffizienten der vier Stützmaterialien können gleich oder verschieden sein. Des Weiteren können die Wärmeübergangskoeffizienten der zwei Stützmaterialien der äußeren Schicht gleich oder verschieden sein. Schließlich können auch die Wärmeübergangskoeffizienten der zwei anderen Stützmaterialien der inneren Schicht gleich oder verschieden sein.

Es kann vorgesehen sein, dass ein Ende des statisch tragenden Stützmaterials an dem Speicherbereich anliegt und an anderes Ende des statisch tragenden Stützmaterials an der Innenseite der Außenwand anliegt. Das statisch tragende Stützmaterial erstreckt sich über die gesamte Länge des Zwischenbereichs zwischen dem Speicherbereich und der Außenwand. Es bildet also eine Stütze. Es können auch mehrere solcher Stützen in dem Zwischenbereich angeordnet sein. Der Bereich zwischen den Stützen kann zumindest teilweise mit einem Dämmmaterial gefüllt sein. Hierdurch kann die Wärmeisolierung angepasst werden. Kosten und / oder Material können eingespart werden. Direkt an dem Speicherbereich anliegend kann ein weiteres Dämmmaterial vorgesehen sein. Der Bereich zwischen den Säulen ist somit (teilweise) zweilagig gefüllt. Das weitere Dämmmaterial kann temperaturbeständig sein, also eine Schmelztemperatur oder Sublimationstemperatur von größer als 600° C, bevorzugt größer als 800° C, weiter bevorzugt größer als 1000° C aufweisen. Für den Fall, dass der Speicherbereich ein festes Wärmespeichermedium aufweist, beispielsweise einen Betonkern, kann das weitere Dämmmaterial eine Schmelztemperatur oder Sublimationstemperatur im Bereich von 1000 °C bis 1400 °C aufweisen. Mit der Wahl des weiteren Dämmmaterials ist die maximale Wärmeabgabe des Speicherbereichs einstellbar. Das weitere Dämmmaterial kann plattenförmig sein, beispielsweise eine Kieselsäure enthaltene Platte.

Die Verwendung von mehreren Lagen von Stützschichten (gleicher oder unterschiedlicher Materialien) hat folgende Vorteile: der maximale Wärmeübergangskoeffizient ist dimensionierbar, ein größerer Bereich des Wärmeübergangskoeffizienten ist einstellbar, dünnere Isolierstärken können eingesetzt werden, es ist eine höhere Speicherkapazität (maximale Temperatur) des Wärmespeichers möglich und das Volumen des Wärmespeichers kann reduziert werden.

Der größere Bereich des Wärmeübergangskoeffizienten ist durch das Verwenden verschiedener Materialien nebeneinander möglich (z.B. statisch tragend und statisch nicht tragend). Bei statisch nicht tragenden Materialien kann die Wärmeleitung weiter verringert werden. Es kann ein geringerer Wärmeübergangskoeffizient erzielt werden bis hin zu einer mehrlagigen Anordnung (Multilayeranordnung) bei der fast nur noch Wärmestrahlung unterbunden werden muss.

Der Wärmespeicher kann fest mit einem Boden eines Gebäudes verbunden sein. Es kann vorgesehen sein, dass der Wärmespeicher in ein Fundament des Gebäudes integriert ist. Weiterhin kann vorgesehen sein, dass eine Bodenseite des Speicherbereichs vollständig von der Au-βenwand umgeben ist. An einer Bodenseite des Wärmespeichers kann eine Isolierung gebildet sein. Es kann vorgesehen sein, dass unter dem Speicherbereich innerhalb des Zwischenbereichs ein Stützmaterial angeordnet ist, beispielsweise in Form der oben genannten Platte oder mehrerer Platten. Mittels der Regulierung des Drucks des gasförmigen Mediums kann hierdurch ebenfalls eine Wärmeisolierung im Bodenbereich gewährleistet werden. Der Speicherbereich kann beispielsweise auf der Platte (bzw. den Platten) stehen. Alternativ oder ergänzend kann eine Kammer unter dem Wärmespeicher gebildet sein. Die Kammer kann eine Kammerwand aufweisen, die einen Kammerbereich umgibt. Der Kammerbereich kann zumindest teilweise mit einem weiteren gasförmigen Medium und einem weiteren Stützmaterial gefüllt sein. Der Kammerbereich kann des Weiteren mit der Pumpeinrichtung oder einer weiteren Pumpeinrichtung derart gekoppelt sein, dass ein Druck des weiteren gasförmigen Mediums regelbar ist. Hierdurch ist eine Wärmeabgabe in Richtung des Bodens regelbar. Für das weitere gasförmige Medium und das weitere Stützmaterial gelten die Ausführungen zu dem gasförmigen Medium und dem Stützmaterial entsprechend. Es kann insbesondere vorgesehen sein, dass das gasförmige Medium und das weitere gasförmige Medium sowie das Stützmaterial und das weitere Stützmaterial gleich sind. Weiterhin kann die Isolierung an der Bodenseite alternativ oder ergänzend eine oder mehrere Schaumglasplatten umfassen, die beispielsweise übereinander gestapelt sind.

Es kann vorgesehen sein, dass der Wärmespeicher derart in dem Gebäude angeordnet ist, dass er von allen Seiten von einer Gebäudeaußenwand des Gebäudes umgeben ist. Beispielsweise ist der Wärmespeicher im Wesentlich zentral in dem Gebäude angeordnet, um eine gleichmäßige Erwärmung des Gebäudes zu ermöglichen. Es kann vorgesehen sein, dass der Wärmespeicher in dem Gebäude frei stehend gebildet ist. Des Weiteren kann vorgesehen sein, dass der Wärmespeicher von einer Gebäudeinnenwand des Gebäudes umgeben ist, beispielsweise vollständig. Der Wärmespeicher kann in die Wandkonstruktion des Gebäudes integriert sein. Beispielsweise kann sich der Wärmespeicher über mehrere Etagen des Gebäudes erstrecken. Hierbei kann die Form des Wärmespeichers an eine Geometrie des Gebäudes angepasst sein. Der Wärmespeicher kann beispielsweise eine geschwungene Form aufweisen. Es kann vorgesehen sein, dass an der Außenwand des Wärmespeichers Wärmeleitelemente angeordnet sind, die sich in das Gebäude erstrecken, um die Wärme zu verteilen.

Es kann vorgesehen sein, dass ein Teil des Wärmespeichers außerhalb des Gebäudes angeordnet ist oder sich unterhalb des Gebäudes befindet, beispielsweise im Keller. Durch die Verwendung verschiedener Stützmaterialien kann im äußeren Teil die maximale Wärmeisolierung durch eine besonders geringe mittlere freie Weglänge des Stützmaterials gehalten werden und gleichfalls im Inneren des Gebäudes die Wärmeabgabe geregelt werden.

Nach einer weiteren Ausführungsform kann das Gebäude mit einer Vakuumisolierung gebildet sein. Die Vakuumisolierung kann die Außenwände und / oder einen Fußboden umfassen (z.B. für einen Keller). Die Vakuumisolierung kann mit der Pumpeinrichtung gekoppelt sein.

Die Vakuumisolierung führt zu einer guten Wärmeisolierung des Gebäudes und ist regelbar. Des Weiteren ist die Vakuumisolierung um einiges dünner als konventionelle Wärmedämmsysteme. Sie ist weiterhin einfach zu montieren. Darüber hinaus ermöglicht sie den Einsatz von kleineren Wärmespeichern in dem Gebäude. Für die Vakuumisolierung des Gebäudes gelten die Ausführungen zur Vakuumisolierung des Wärmespeichers analog.

Der Wärmespeicher kann frei von Anschlüssen zu einer Heizungsanlage des Gebäudes sein. Des Weiteren kann das Gebäude selbst frei von einer Heizungsanlage sein. Es kann vorgesehen sein, eine Heizung des Gebäudes ausschließlich mittels des Wärmespeichers zu realisieren. Vorteilhaft hierfür ist es, wenn die Gebäudeaußenwand mit einer starken (guten) Wärmeisolierung gebildet ist. Ergänzend kann vorgesehen sein, mehrere Wärmspeicher in dem Gebäude zu installieren. Hierbei kann vorgesehen sein, dass jeder der mehreren Wärmetauscher jeweils mit einer Pumpeinrichtung gebildet ist. Alternativ kann eine gemeinsame Pumpeinrichtung vorgesehen sein, die an die mehreren Wärmespeicher gekoppelt ist. Nach einer Ausführungsform kann der Wärmespeicher konfiguriert sein, die in dem Wärmespeichermedium gespeicherte Wärme im Wesentlichen über die gesamte Fläche der Außenwand abzugeben. Die Abgabe der Wärme erfolgt beispielsweise im Wesentlichen gleichmäßig über die gesamte Fläche der Außenwand verteilt. Gemäß einer alternativen Ausführungsform können in dem Zwischenbereich mehrere Zonen gebildet sein, derart, dass eine Abgabe der in dem Wärmespeichermedium gespeicherten Wärme unterschiedlich stark über die Außenwand erfolgt. Die unterschiedlichen Zonen können beispielsweise durch unterschiedliche Stärken des Stützmaterials, insbesondere der Platten, und / oder unterschiedliche Materialien gebildet sein. Des Weiteren kann der Zwischenbereich mittels mehrerer Zwischenwände in mehrere voneinander abgeschlossene Teilzwischenbereiche unterteilt sein. Der Druck in den Teilzwischenbereichen kann unabhängig voneinander regelbar sein, beispielsweise mittels einer oder mehrerer an die Teilbereiche gekoppelten Pumpeinrichtungen, sodass hierdurch die Wärmeabgabe gesteuert werden kann.

Die Außenwand des Wärmespeichers kann aus einem Metall oder einer Metalllegierung, insbesondere Edelstahl, aus einem Glas oder aus einem Kunststoff bestehen. Die Außenwand kann einteilig oder mehrteilig gebildet sein. Es können Dehnungselemente zwischen den Elementen der Außenwand gebildet sein, die eine Ausdehnung des Wärmeträgermediums bei einer Erwärmung aufnehmen. Die Außenwand kann beispielsweise eine gewellte Form aufweisen. Die Außenwand kann aus einer Folie gebildet sein, beispielsweise einer Metallfolie. Die Außenwand kann auf einer Innenseite frei von einer Verspiegelung sein.

An die Pumpeinrichtung kann ein Gastank gekoppelt sein, der das gasförmige Medium beim Abpumpen (also Verringern des Drucks) aufnimmt. Wenn der Druck später erhöht werden soll, kann das in dem Gastank gespeicherte gasförmige Medium wieder in den Zwischenbereich abgelassen werden.

Die Pumpeinrichtung kann als Vakuumpumpe ausgeführt sein, beispielsweise eine Verdrängerpumpe, eine Molekularpumpe oder eine Turbomolekularpumpe.

Der Wärmespeicher kann als Langzeitwärmespeicher ausgeführt sein. Ein Langzeitwärmespeicher ist konfiguriert, in der warmen Jahreszeit, beispielsweise bei starker Sonneneinstrahlung, Wärme zu speichern und mit der gespeicherten Wärme ein (gut isoliertes) Gebäude in der kalten Jahreszeit zu heizen.

Es kann vorgesehen sein, dass an einer Außenseite der Außenwand ein Kühlelement angeordnet ist, beispielsweise eine Kühlleitung. Hiermit kann die Außenwand gegebenenfalls gekühlt werden, falls die Wärmeabgabe aus dem Speicherbereich unerwünscht hoch sein sollte. Es können auch mehrere Kühlelemente vorgesehen sein. Gegebenenfalls kann mit dem Kühlelement eine Kühlung eines Gebäudes durchgeführt werden. Es kann vorgesehen sein, dass das Kühlelement mit einer Kaltwasserleitung eines Gebäudes oder einem Regenwassertank außerhalb des Gebäudes gekoppelt ist.

Nach einer weiteren Ausführungsform kann vorgesehen sein, dass innerhalb der Außenwand eine Wärmetauschereinrichtung angeordnet ist, die mit dem Speicherbereich gekoppelt ist, derart, dass ein Wärmetauschermedium der Wärmetauschereinrichtung von dem Wärmespeichermedium Wärme aufnimmt, und wobei die Wärmetauschereinrichtung ein die Außenwand durchstoßendes Leitungselement aufweist, mittels dem das erwärmte Wärmetauschermedium in einen Bereich außerhalb der Außenwand transportiert werden kann. Der Wärmeaustausch zwischen dem Wärmetauschermedium und dem Wärmespeichermedium kann ebenfalls mittels eines regelbaren Vakuums erfolgen. Es kann vorgesehen sein, dass zwischen dem Wärmespeichermedium und dem Wärmetauschermedium ein weiterer Zwischenbereich gebildet ist, der mit einem weiteren gasförmigen Medium gefüllt ist. Der weitere Zwischenbereich kann an die Pumpeinrichtung des Wärmespeichers gekoppelt sein. Alternativ kann eine weitere Pumpeinrichtung an den weiteren Zwischenbereich gekoppelt sein. Mittels der Regelung des Drucks des weiteren gasförmigen Mediums in dem weiteren Zwischenbereich ist die Wärmeabgabe vom Wärmespeichermedium zu dem Wärmetauschermedium regelbar. Das weitere gasförmige Medium kann mit dem gasförmigen Medium des Wärmespeichers identisch sein. Alternativ kann das weitere gasförmige Medium von dem gasförmigen Medium verschieden sein. Das weitere gasförmige Medium kann ein reines Gas sein oder als ein Gasgemisch vorliegen, beispielsweise Luft. Mit dem Wärmetauscher kann beispielsweise warmes Trinkwasser bereitgestellt werden. Es können mehrere Wärmetauschereinrichtungen innerhalb der Außenwand angeordnet sein. Die mehreren Wärmetauschereinrichtungen können mit einer gemeinsamen Pumpeinrichtung oder jeweils mit einer separaten Pumpeinrichtung gekoppelt sein.

Das System kann weiterhin einen Warmwasserspeicher aufweisen, der mit dem Wärmespeicher gekoppelt ist, derart, dass Wärme aus dem Wärmespeicher zu dem Warmwasserspeicher abgegeben wird, um Wasser in dem Warmwasserspeicher zu erwärmen. Der Warmwasserspeicher kann mit einer Vakuumisolierung gebildet sein. Hierdurch wird eine Überhitzung des Warmwasserspeichers vermieden. Für die Vakuumisolierung des Warmwasserspeichers gelten die Ausführungen zu der Vakuumisolierung des Wärmespeichers analog.

In einer anderen Weiterbildung kann das System weiterhin einen Generator zum Erzeugen elektrischer Energie aufweisen, der mit dem Wärmespeicher gekoppelt ist, sodass der Generator mit Wärme aus dem Wärmespeicher betreibbar ist. Der Generator kann beispielsweise mit einer Dampfturbine oder mit einem Stirling-Motor gekoppelt sein. Eine Dampfturbine besteht aus einer schnell rotierenden Welle, bestückt mit vielen Turbinenschaufeln, die von Wasserdampf angeströmt werden. Der Wasserdampf kann mit der Wärme aus dem Wärmespeicher erhitzt werden. Der Stirling-Motor ist eine Wärmekraftmaschine, in der ein Arbeitsgas wie Luft, Helium oder Wasserstoff in einem abgeschlossenen Volumen von außen in einem Bereich erhitzt und in einem anderen gekühlt wird, um mechanische Arbeit zu leisten. Das Erhitzen kann wiederum mittels der Wärme aus dem Wärmespeicher erfolgen. Somit kann elektrische Energie preiswerter als in chemischen Batterien gespeichert werden. Der Stirling-Motor kann mittels der Pumpeinrichtung mit dem Wärmespeicher gekoppelt werden.

Der Speicherbereich weist ein festes Wärmespeichermedium auf. Der Speicherbereich wird in diesem Fall durch einen festen Speicherkern gebildet. Ein Festkörper als Wärmespeichermedium kann auf sehr hohe Temperaturen von beispielsweise mehreren hundert Grad Celsius erwärmt werden. Hierdurch kann auf verhältnismäßig kleinem Raum eine große Wärmemenge gespeichert werden. Als festes Wärmespeichermedium können beispielsweise Basaltsplitt, Beton, Speckstein, Schamotte oder Stahl eingesetzt werden. Es kann vorgesehen sein, dass in dem festen Wärmespeichermedium eine oder mehrere Wärmetauschereinrichtungen angeordnet sind. Die eine oder mehrere Wärmetauschereinrichtung kann mittels eines hitzebeständigen Materials von dem festen Wärmespeichermedium getrennt sein.

Des Weiteren kann vorgesehen sein, dass das feste Wärmespeichermedium evakuiert ist. Im Allgemeinen enthalten Festkörper aufgrund ihrer Herstellung, ihrer Be- und Verarbeitung und ihrer Lagerung nicht nur auf ihrer Oberfläche sondern auch in ihrem Inneren Gasmoleküle. Die Moleküle können im Kristallgitter gelöst, an Korngrenzen angelagert oder in Hohlräumen eingeschlossen sein. Wenn die Umgebung des Festkörpers evakuiert wird, gelangen die Gasmoleküle zur Oberfläche des Festkörpers (Diffusion) und von dort in den evakuierten Bereich (Desorption). Dieser Prozess wird auch als Gasabgabe bezeichnet. Die Gasabgabe beeinflusst die Erzeugung und Aufrechterhaltung eines Vakuums. Es kann nun vorgesehen sein, dass in dem Zwischenbereich des Wärmespeichers ein Vakuum gebildet ist, derart, dass das feste Wärmespeichermedium selbst evakuiert ist, also keine oder nur wenige Gasmoleküle aufweist.

Es kann weiterhin vorgesehen sein, dass der Speicherbereich mit einer Photovoltaikeinrichtung gekoppelt ist, mittels der das Wärmespeichermedium erwärmt werden kann. Eine Photovoltaikeinrichtung wandelt Lichtenergie in elektrische Energie um. Beispielsweise kann Sonnenlicht mittels einer Solarzelle in elektrische Energie umgewandelt werden. Die elektrische Energie kann zum Erwärmen des Wärmespeichermediums eingesetzt werden. Es kann beispielsweise vorgesehen sein, dass auf einem Dach des Gebäudes eine Photovoltaikanlage installiert ist, die mit dem Wärmespeicher gekoppelt ist. Es kann vorgesehen sein, dass die Photovoltaikeinrichtung mit einem geringfügig dimensionierten Wechselrichter gebildet ist. Alternativ kann die Photovoltaikeinrichtung frei von einem Wechselrichter gebildet sein. In beiden Fällen kann das Wärmespeichermedium auch mit Gleichstrom erwärmt werden.

Nach einer nicht erfindungsgemässen Weiterbildung kann vorgesehen sein, dass der Speicherbereich ein von einer Innenwand umgebenes Wärmespeicherfluid aufweist. Der Wärmespeicher ist in diesem Fall doppelwandig ausgeführt und gehört nicht zum Schutzfang des Anspruchs 1. Zwischen der Innenwand und der Außenwand ist der Zwischenbereich gebildet, der zumindest teilweise mit dem gasförmigen Medium und dem Stützmaterial gefüllt ist. Das Wärmespeicherfluid kann beispielsweise Wasser sein. Durch seine hohe spezifische Wärmekapazität und seine relativ niedrige Viskosität stellt Wasser als Wärmespeichermedium akzeptable Anforderungen an die Technik. Insbesondere macht es das Einbringen wie auch das Austragen der gespeicherten thermischen Energie gleichermaßen einfach. Es kann vorgesehen sein, dass der Wärmespeicher mit einem Überdruckventil gebildet ist. Die Innenwand kann beispielsweise aus Edelstahl gebildet sein.

Der Speicherbereich kann mit einer Solarthermieeinrichtung gekoppelt sein, mittels der das Wärmespeichermedium erwärmt werden kann. Die Solarthermieeinrichtung wandelt Sonnenlicht in thermische Energie um. Es kann beispielsweise vorgesehen sein, dass auf einem Dach des Gebäudes eine Solarthermieanlage installiert ist, die mit dem Wärmespeicher gekoppelt ist.

Alternativ oder ergänzend kann der Speicherbereich mit einem oder mehreren Parabolkollektoren gekoppelt sein. Die Parabolkollektoren bündeln das Sonnenlicht, ähnlich wie in einem solarthermischen Kraftwerk, und erhitzen ein Wärmeträgermedium, beispielsweise Wasser oder flüssiges Natrium.

Des Weiteren kann vorgesehen sein, dass das Wärmespeichermedium ein Paraffin ist. In diesem Fall kann das Paraffin gegebenenfalls von einer Innenwand umgeben sein. Der Speicherbereich kann mit einer Solarthermieeinrichtung oder einer Photovoltaikeinrichtung gekoppelt sein, um das Paraffin zu erwärmen.

Es kann vorgesehen sein, dass im Speicherbereich ein festes und ein flüssiges Wärmespeichermedium angeordnet sind.

Es kann auch vorgesehen sein, dass der Speicherbereich mit einer Photothermieeinrichtung gekoppelt ist. Die Photothermieeinrichtung vereint die Effekte der Photovoltaik und der Solarthermie. Hiermit kann sowohl ein festes als auch ein fluides Wärmespeichermedium oder eine Kombination von beidem erwärmt werden. Des Weiteren kann der Speicherbereich mit einem Ofen gekoppelt sein, beispielsweise einem Holzvergaserofen.

Es kann vorgesehen sein, dass eine Solaranlage, beispielsweise eine Photovoltaikeinrichtung, eine Solarthermieeinrichtung und / oder eine Photothermieeinrichtung, oder eine andere Heizeinrichtung (z.B. Holzvergaserofen) mit einer Wärmepumpe gekoppelt sind. Die Wärmepumpe ist beispielsweise außerhalb des Gebäudes angeordnet. Die von der Solaranlage oder der Heizeinrichtung zugeführte Energie wird erhöht, beispielsweise unter Abkühlung der Umgebung, und die erhöhte Wärmeenergie wird dem Speicherbereich zugeführt, um das Wärmespeichermedium zu erwärmen.

### Beschreibung beispielhafter Ausführungsformen

Weitere Ausführungsformen werden im Folgenden unter Bezugnahme auf Figuren einer Zeichnung näher erläutert. Hierbei zeigen:
- Fig. 1: eine schematische Darstellung eines Wärmespeichers mit einem festen Wärmespeichermedium,
- Fig. 2: eine schematische Darstellung eines weiteren Wärmespeichers mit einem festen Wärmespeichermedium,
- Fig. 3: eine schematische Darstellung eines nicht erfindungsgemässen doppelwandigen Wärmespeichers mit einem flüssigen Wärmespeichermedium,
- Fig. 4: eine schematische Darstellung eines weiteren nicht erfindungsgemässen doppelwandigen Wärmespeichers mit einem flüssigen Wärmespeichermedium und
- Fig. 5 bis 7: Ausschnitte des Zwischenbereichs.

Im Folgenden werden für gleiche Komponenten gleiche Bezugszeichen verwendet.

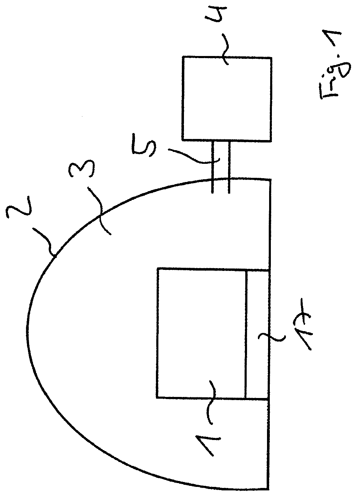

Fig. 1 zeigt einen Wärmespeicher mit einem Speicherbereich, der ein festes Wärmespeichermedium 1 aufweist. Das Wärmespeichermedium 1 ist von einer Außenwand 2 umgeben. Zwischen dem Wärmespeichermedium 1 und der Außenwand 2 ist ein Zwischenbereich 3 gebildet. Der Zwischenbereich 3 ist mit einem gasförmigen Medium gefüllt, beispielsweise Luft. Des Weiteren ist der Zwischenbereich 3 zumindest teilweise mit einem Stützmaterial gefüllt (nicht dargestellt). Eine Vakuumpumpe 4 ist mittels einer Leitung 5 mit dem Zwischenbereich gekoppelt. Mittels der Vakuumpumpe 4 ist der Druck des gasförmigen Mediums in dem Zwischenbereich 3 regelbar. Hierdurch kann die Wärmeabgabe vom Wärmespeichermedium 1 an eine äußere Umgebung reguliert werden. Unter dem festen Wärmespeichermedium 1 ist eine Platte 17 aus einem Stützmaterial angeordnet, um eine Wärmeisolierung im Bodenbereich zu ermöglichen.

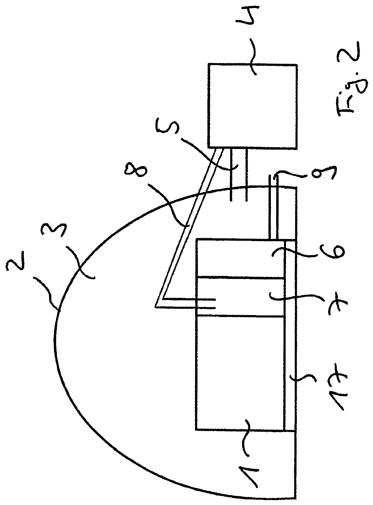

In Fig. 2 ist ein weiterer Wärmespeicher dargestellt, für den die oben gemachten Ausführungen entsprechend gelten. Innerhalb der Außenwand 2 ist ein Wärmetauscher 6 angeordnet, der ein Wärmetauschermedium aufweist. Zwischen dem festen Wärmespeichermedium 1 und dem Wärmetauscher 6 ist ein weiterer Zwischenbereich 7 gebildet, er mit einem weiteren gasförmigen Medium gefüllt ist. Die Vakuumpumpe 4 ist mittels einer weiteren Leitung 8 mit dem Zwischenbereich 7 gekoppelt. Mittels der Vakuumpumpe 4 ist der Druck in dem weiteren Zwischenbereich 7 regelbar, wodurch der Wärmeaustausch zwischen dem Wärmespeichermedium 1 und dem Wärmetauschermedium in dem Wärmetauscher 6 reguliert wird. Von dem Wärmetauscher 6 führt eine Wärmeleitung 9 aus dem Wärmespeicher heraus, mit der das erwärmte Wärmetauschermedium an die Umgebung transportiert wird. Das erwärmte Wärmetauschermedium kann beispielsweise in einen Trinkwasserkreislauf des Gebäudes eingespeist werden (nicht dargestellt). Unter dem festen Wärmespeichermedium 1, dem Wärmetauscher 6 und dem Zwischenbereich 7 ist eine Platte 17 aus einem Stützmaterial angeordnet.

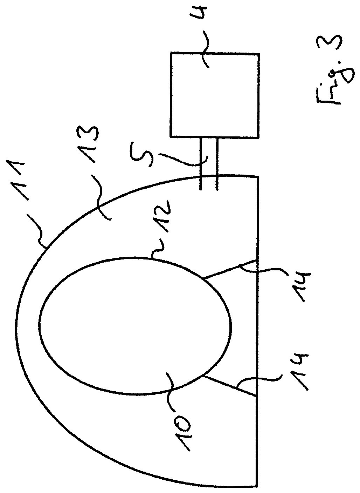

Fig. 3 zeigt einen doppelwandigen Wärmespeicher mit einer Außenwand 11 und einer Innenwand 12. Die Innenwand 12 umgibt einen Speicherbereich 10, der ein flüssiges Wärmespeichermedium aufweist, beispielsweise Wasser. Zwischen der Innenwand 12 und der Außenwand 11 ist ein Zwischenbereich 13 gebildet, der zumindest teilweise mit einem gasförmigen Medium und einem Stützmaterial gefüllt ist. Die Vakuumpumpe 4 ist mittels der Leitung 5 an den Zwischenbereich 13 gekoppelt. Die Innenwand 12 ist mittels zweier Stützelemente 14 auf dem Boden abgestützt. Alternativ kann die Innenwand 12 auf einer oder mehrerer Platten aus einem Stützmaterial abgestützt sein (nicht dargestellt).

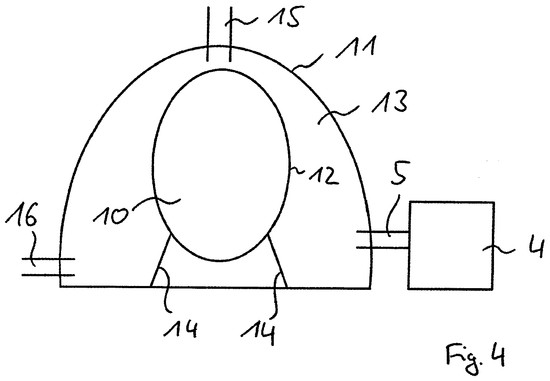

In Fig. 4 ist ein weiterer doppelwandiger Wärmespeicher dargestellt. An einem oberen Ende ist eine Einlassöffnung 15 für ein feinporiges Schüttgut gebildet. Mit dem Schüttgut kann ein gestütztes Vakuum in dem Zwischenbereich 13 gebildet werden. Mittels im unteren Bereich der Außenwand 11 gebildeten Auslassöffnung 16 kann das Schüttgut aus dem Zwischenbereich 13 entfernt werden.

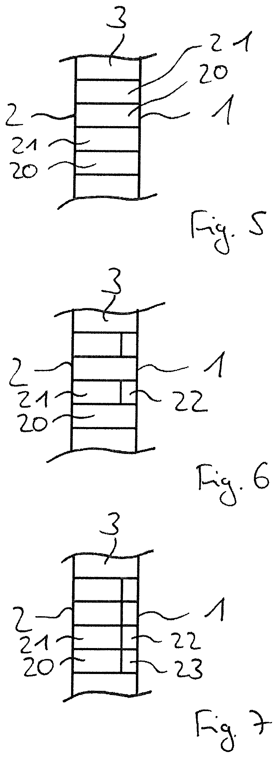

Fig. 5 bis 7 zeigen Ausschnitte des Zwischenbereichs 3 zwischen dem festen Speicherkern 1 und der Außenwand 2. In dem Zwischenbereich 3 sind verschiedene Stützmaterialien angeordnet.

In Fig. 5 sind in dem Zwischenbereich 3 abwechselnd ein statisch tragendes Stützmaterial (Stütze) 20 und ein statisch nicht tragendes Stützmaterial (Dämmmaterial) 21 angeordnet. Als Dämmmaterial kann beispielsweise Glaswolle eingesetzt werden.

Bei der in Fig. 6 gezeigten Ausführungsform sind zwischen den Stützen 20 das Dämmmaterial 21 und ein weiteres Dämmmaterial 22 angeordnet. Das weitere Dämmmaterial 22 liegt (direkt) an dem festen Speicherkern 1 an. Es ist hochtemperaturbeständig, beispielsweise eine Kieselsäureplatte.

Fig. 7 zeigt eine weitere Variante, wobei die Stützen 20 auf einem weiteren statisch tragenden Stützmaterial 23 aufliegen.

## Patentansprüche

1. System zum Speichern von Energie mit einem Wärmespeicher, der einen Speicherbereich, und eine den Speicherbereich umgebende Außenwand (2, 11) aufweist, wobei der Speicherbereich ein festes Wärmespeichermedium (1, 10) aufweist, wobei ein Zwischenbereich (3, 13) zwischen dem Speicherbereich und der Außenwand (2, 11) zumindest teilweise mit einem gasförmigen Medium und einem Stützmaterial gefüllt ist und wobei der Zwischenbereich (3, 13) mit einer Pumpeinrichtung (4) gekoppelt ist, derart, dass ein Druck des gasförmigen Mediums regelbar ist, **dadurch gekennzeichnet, dass** der Wärmespeicher ausschließlich die Außenwand (2, 11) aufweist und frei von Innenwänden und weiteren Außenwänden ist.

2. System nach Anspruch 1, wobei der Zwischenbereich (3, 13) mit wenigstens zwei verschiedenen Stützmaterialien zumindest teilweise gefüllt ist.

3. System nach Anspruch 2, wobei ein statisch tragendes Stützmaterial und ein statisch nicht tragendes Stützmaterial in dem Zwischenbereich (3, 13) angeordnet sind.

4. System nach Anspruch 2 oder 3, wobei die Stützmaterialien in mehreren Lagen angeordnet sind.

5. System nach einem der vorangehenden Ansprüche, weiterhin einen Generator zum Erzeugen elektrischer Energie aufweisend, der mit dem Wärmespeicher gekoppelt ist, sodass der Generator mit Wärme aus dem Wärmespeicher betreibbar ist.

6. System nach einem der vorangehenden Ansprüche, weiterhin einen Warmwasserspeicher aufweisend, der mit dem Wärmespeicher gekoppelt ist, derart, dass Wärme aus dem Wärmespeicher zu dem Warmwasserspeicher abgegeben wird, um Wasser in dem Warmwasserspeicher zu erwärmen.

7. System nach einem der vorangehenden Ansprüche, wobei der Wärmespeicher konfiguriert ist, die in dem Wärmespeichermedium gespeicherte Wärme im Wesentlichen über die gesamte Fläche der Außenwand (2, 11) abzugeben.

8. System nach einem der Ansprüche 1 bis 6, wobei in dem Zwischenbereich mehrere Zonen gebildet sind, derart, dass eine Abgabe der in dem Wärmespeichermedium (1, 10) gespeicherten Wärme unterschiedlich stark über die Außenwand (2, 11) erfolgt.

9. System nach einem der vorangehenden Ansprüche, wobei innerhalb der Außenwand (2, 11) eine Wärmetauschereinrichtung (6) angeordnet ist, die mit dem Speicherbereich gekoppelt ist, derart, dass ein Wärmetauschermedium der Wärmetauschereinrichtung (6) von dem Wärmespeichermedium Wärme aufnimmt, und wobei die Wärmetauschereinrichtung ein die Außenwand durchstoßendes Leitungselement (9) aufweist, mittels dem das erwärmte Wärmetauschermedium in einen Bereich außerhalb der Außenwand (2, 11) transportiert werden kann.

10. System nach einem der vorangehenden Ansprüche, wobei das feste Wärmespeichermedium (1) evakuiert ist.

11. System nach einem der Ansprüche 1 bis 10, wobei der Speicherbereich mit einer Photovoltaikeinrichtung gekoppelt ist, mittels der das Wärmespeichermedium (1, 10) erwärmt werden kann.

12. System nach einem der Ansprüche 1 bis 10, wobei der Speicherbereich mit einer Solarthermieeinrichtung gekoppelt ist, mittels der das Wärmespeichermedium (1, 10) erwärmt werden kann.

13. System nach einem der vorangehenden Ansprüche, wobei an einer Außenseite der Au-βenwand (2, 11) ein Kühlelement angeordnet ist.

## Claims

1. System for storing energy, comprising a heat accumulator which has a storage region and an outer wall (2, 11) surrounding the storage region, the storage region having a solid heat storage medium (1, 10), an intermediate region (3, 13) between the storage region and the outer wall (2, 11) being at least partially filled with a gaseous medium and a support material, and the intermediate region (3, 13) being coupled to a pump device (4) such that a pressure of the gaseous medium can be regulated, **characterized in that** the heat accumulator has only the outer wall (2, 11) and is free of inner walls and further outer walls.

2. System according to claim 1, wherein the intermediate region (3, 13) is at least partially filled with at least two different support materials.

3. System according to claim 2, wherein a statically load-bearing support material and a statically non-load-bearing support material are arranged in the intermediate region (3, 13).

4. System according to claim 2 or 3, wherein the support materials are arranged in a plurality of layers.

5. System according to any of the preceding claims, further comprising a generator for generating electrical energy that is coupled to the heat accumulator such that the generator can be operated with heat from the heat accumulator.

6. System according to any of the preceding claims, further comprising a hot water tank which is coupled to the heat accumulator such that heat is released from the heat accumulator to the hot water tank in order to heat water in the hot water tank.

7. System according to any of the preceding claims, wherein the heat accumulator is configured to release the heat stored in the heat storage medium substantially over the entire surface of the outer wall (2, 11).

8. System according to any of claims 1 to 6, wherein a plurality of zones are formed in the intermediate region such that the heat stored in the heat storage medium (1, 10) is released at varying intensities via the outer wall (2, 11).

9. System according to any of the preceding claims, wherein a heat exchanger device (6) is arranged within the outer wall (2, 11) and is coupled to the storage region such that a heat exchanger medium of the heat exchanger device (6) absorbs heat from the heat storage medium, and wherein the heat exchanger device has a line element (9) which penetrates the outer wall and by means of which the heated heat exchanger medium can be transported into a region outside the outer wall (2, 11).

10. System according to any of the preceding claims, wherein the solid heat storage medium (1) is evacuated.

11. System according to any of claims 1 to 10, wherein the storage region is coupled to a photovoltaic device, by means of which the heat storage medium (1, 10) can be heated.

12. System according to any of claims 1 to 10, wherein the storage region is coupled to a solar thermal device, by means of which the heat storage medium (1, 10) can be heated.

13. System according to any of the preceding claims, wherein a cooling element is arranged on an outer side of the outer wall (2, 11).

## Revendications

1. Système de stockage d'énergie doté d'un accumulateur de chaleur qui comporte une zone de stockage et une paroi extérieure (2, 11) entourant la zone de stockage, dans lequel la zone de stockage comporte un medium solide de stockage de chaleur (1, 10), dans lequel une zone intermédiaire (3, 13) située entre la zone de stockage et la paroi extérieure (2, 11) est rempli au moins partiellement d'un medium gazeux et d'un matériau de support, et dans lequel la zone intermédiaire (3, 13) est couplée à un dispositif de pompage (4) de façon à pouvoir régler la pression du medium gazeux, **caractérisé en ce que** l'accumulateur de chaleur ne comporte que la paroi extérieure (2, 11) et est exempt de parois intérieures et d'autres parois extérieures.

2. Système selon la revendication 1, dans lequel la zone intermédiaire (3, 13) est au moins partiellement remplie d'au moins deux matériaux de support différents.

3. Système selon la revendication 2, dans lequel un matériau de support statiquement porteur et un matériau de support statiquement non porteur sont disposés dans la zone intermédiaire (3, 13).

4. Système selon la revendication 2 ou 3, dans lequel les matériaux de support sont disposés en plusieurs couches.

5. Système selon l'une des revendications précédentes, comprenant en outre un générateur destiné à générer de l'énergie électrique couplé à un dispositif de stockage de chaleur de telle sorte que le générateur puisse fonctionner avec la chaleur du dispositif de stockage de chaleur.

6. Système selon l'une des revendications précédentes, comprenant en outre un accumulateur d'eau chaude couplé à l'accumulateur de chaleur de façon à transférer de la chaleur de l'accumulateur d'eau chaude à l'accumulateur d'eau chaude pour chauffer de l'eau dans l'accumulateur d'eau chaude.

7. Système selon l'une des revendications précédentes, dans lequel le support de stockage de chaleur est configuré pour libérer la chaleur stockée dans le support de stockage de chaleur sur sensiblement toute la surface de la paroi extérieure (2, 11).

8. Système selon l'une des revendications 1 à 6, dans lequel une pluralité de zones sont formées dans la zone intermédiaire, de sorte qu'une libération de la chaleur stockée dans le medium de stockage de chaleur (1, 10) se produise à différents degrés par l'intermédiaire de la paroi extérieure (2, 11).

9. Système selon l'une des revendications précédentes, dans lequel, à l'intérieur de la paroi extérieure (2, 11), un dispositif échangeur de chaleur (6) est disposé, lequel dispositif échangeur de chaleur est couplé à la zone de stockage de telle manière qu'un medium d'échange de chaleur du dispositif échangeur de chaleur (6) absorbe la chaleur du medium de stockage de chaleur, et dans lequel le dispositif échangeur de chaleur comporte un élément de conduit (9) perçant la paroi extérieure, au moyen duquel le medium d'échange de chaleur chauffé peut être transporté vers une zone située à l'extérieur de la paroi extérieure (2, 11).

10. Système selon l'une des revendications précédentes, dans lequel le medium solide de stockage de chaleur (1) est évacué.

11. Système selon l'une des revendications 1 à 10, dans lequel la zone de stockage est couplée à un dispositif photovoltaïque au moyen duquel le support de stockage de chaleur (1, 10) peut être chauffé.

12. Système selon l'une des revendications 1 à 10, dans lequel la zone de stockage est couplée à un dispositif solaire thermique au moyen duquel le medium de stockage de chaleur (1, 10) peut être chauffé.

13. Système selon l'une des revendications précédentes, dans lequel un élément de refroidissement est disposé sur un côté extérieur de la paroi extérieure (2, 11).
